# EUROPÄISCHE PATENTSCHRIFT

(11) **EP 4 200 055 B1**
(45) Veröffentlichungstag und Bekanntmachung des Hinweises auf die Patenterteilung: **18.06.2025**
(21) Anmeldenummer: 21769091.6
(22) Anmeldetag: 23.08.2021
(51) Int. Cl.: B01D 46/00, B01D 46/24, B01D 46/52

(54) **FILTERSYSTEM UND FILTERELEMENT**
FILTER SYSTEM AND FILTER ELEMENT
SYSTÈME DE FILTRE ET ÉLÉMENT FILTRANT

(30) Priorität: 24.08.2020 DE 102020122025
(43) Veröffentlichungstag der Anmeldung: 28.06.2023
(73) Patentinhaber: MANN+HUMMEL GmbH, 71636 Ludwigsburg (DE)
(72) Erfinder: STARK, Dennis, 69256 Mauer (DE); KAUFMANN, Michael, 67149 Meckenheim (DE); RUHLAND, Klaus-Dieter, 67149 Meckenheim (DE)
(74) Vertreter: Mann + Hummel Intellectual Property
(86) Internationale Anmeldenummer: PCT/EP2021/073268
(87) Internationale Veröffentlichungsnummer: WO 2022/043260

(56) Entgegenhaltungen:
- WO-A1-2019/112560
- DE-A1- 102018 129 695
- DE-U1- 202005 001 693
- US-A1- 2016 144 310

## Beschreibung

### Technisches Gebiet

Die vorliegende Erfindung betrifft ein Filtersystem und ein Filterelement eines derartigen Filtersystems.

### Stand der Technik

Ein Filtersystem kann ein Filtergehäuse und ein entnehmbar in dem Filtergehäuse aufgenommenes Filterelement mit einem gefalteten Filtermedium aufweisen. Zum Zuführen eines zu reinigenden Fluids zu dem Filterelement umfasst das Filtergehäuse einen Fluideinlass, mit dessen Hilfe das Filtermedium seitlich mit dem Fluid anströmbar ist. Bei einer derartigen seitlichen Anströmung kann es zu Pulsationen von Falten des Filtermediums kommen. Diese Pulsationen können zu einer Geräuschentwicklung führen. Dies gilt es zu vermeiden.

WO 2019/112560 A1 zeigt eine Filteranordnung, bei der ein gefaltetes Filterelement über einen weiten Bereich von einer Barriere abgedeckt ist, um eine Verformung des Filterelements zu verhindern.

DE 20 2005 001693 U1 beschreibt einen zylindrischen Filtereinsatz eines Flüssigkeitsfilters, der von einer rings um ein Filtermedium verlaufenden Hüllschicht umgeben ist.

DE 10 2018 129695 A1 zeigt ein Filterelement mit einem Verstärkungsband.

US 2016/0144310 A1 beschreibt ein Filtersystem mit einem Filtergehäuse, in dem ein Filterelement angeordnet ist. Das Filtergehäuse weist einen Fluideinlass auf, der derart geneigt ist, dass das Filterelement schräg angeströmt wird.

### Offenbarung der Erfindung

Vor diesem Hintergrund liegt der vorliegenden Erfindung die Aufgabe zugrunde, ein verbessertes Filtersystem anzugeben.

Demgemäß wird ein Filtersystem mit einem Filtergehäuse, welches einen Fluideinlass zum Einlassen von Fluid in das Filtergehäuse umfasst, und einem entnehmbar in dem Filtergehäuse aufgenommenen Filterelement vorgeschlagen, welches ein gefaltetes Filtermedium und einen in das Filtermedium stabilisierenden Stabilisierungsring umfasst, wobei der Stabilisierungsring derart an dem Filtermedium angebracht ist, dass der Stabilisierungsring zumindest abschnittsweise innerhalb eines Anströmquerschnitts des Fluideinlasses angeordnet ist, wobei bevorzugt das Fluid im Betrieb des Filtersystems das Filtermedium direkt anströmt, wobei der Stabilisierungsring mittig in dem Anströmquerschnitt angeordnet ist, und wobei das Fluid im Betrieb des Filtersystems senkrecht gegen das Filtermedium strömt.

Dadurch, dass der Stabilisierungsring innerhalb des Anströmquerschnitts angeordnet ist, können vorteilhafterweise Pulsationen des Filtermediums im Bereich des Anströmquerschnitts verhindert werden, da Falten des Filtermediums mit Hilfe des Stabilisierungsrings stabilisiert werden. Dies führt zu einer Geräuschreduktion.

Das Filtersystem ist vorzugsweise ein Luftfiltersystem. Dementsprechend ist das Filterelement ein Luftfilterelement. Das Filtersystem ist beispielsweise geeignet, einem Druckluftkompressor zugeführte Luft zu reinigen. Das Filtersystem kann jedoch auch als Ansaugluftfilter für eine Brennkraftmaschine eingesetzt werden. Das Filtergehäuse umfasst vorzugsweise ein topfförmiges Gehäuseunterteil sowie ein von dem Gehäuseunterteil abnehmbares Gehäuseoberteil. Das Filterelement kann zum Wechseln desselben aus dem Filtergehäuse entnommen und getauscht werden. Der Fluideinlass ist vorzugsweise rohrförmig. Der Fluideinlass ist seitlich an dem Gehäuseunterteil angeordnet. Das zu reinigende Fluid strömt somit senkrecht zu einer Symmetrieachse des Filterelements gegen das Filtermedium. Der Anströmquerschnitt kann auch als Ausströmquerschnitt bezeichnet werden.

Das Filtermedium ist vorzugsweise ein zickzackförmig gefalteter Faltenbalg. Das Filtermedium kann zylinderförmig sein. Der Stabilisierungsring ist insbesondere außenseitig auf dem Filtermedium aufgebracht und verläuft ringförmig vollständig um das Filtermedium herum. Insbesondere ist der Stabilisierungsring auf Faltenspitzen von Falten des Filtermediums angebracht. Dass der Stabilisierungsring "innerhalb" des Anströmquerschnitts angeordnet ist, bedeutet vorliegend, dass der Stabilisierungsring mit Blickrichtung von dem Fluideinlass auf das Filtermedium von dem Anströmquerschnitt abgedeckt oder überdeckt wird. Der Anströmquerschnitt kann dabei kreisförmig sein. Der Anströmquerschnitt kann jedoch jegliche beliebige andere Geometrie aufweisen.

Dass der Stabilisierungsring "zumindest abschnittsweise" innerhalb des Anströmquerschnitts angeordnet ist, kann vorliegend bedeuten, dass der ringförmig um das Filtermedium umlaufende Stabilisierungsring in einer Umfangsrichtung betrachtet nur teilweise von dem Anströmquerschnitt überdeckt wird. Entlang einer Längsrichtung betrachtet, welche von einer ersten Endscheibe des Filterelements hin zu einer zweiten Endscheibe des Filterelements orientiert ist, ist der Stabilisierungsring bevorzugt vollständig innerhalb des Anströmquerschnitts platziert.

Der Stabilisierungsring ist mittig in dem Anströmquerschnitt angeordnet. "Mittig" ist vorliegend bevorzugt entlang der zuvor erwähnten Längsrichtung zu verstehen. Beispielsweise kann der Stabilisierungsring jedoch ausgehend von einer exakt mittigen Anordnung um beispielsweise bis zu 15 mm, insbesondere um bis zu 10 mm, bezüglich einer Mittel- oder Symmetrieachse des Fluideinlasses nach oben oder unten versetzt positioniert sein.

Unter dem "Betrieb" des Filtersystems ist vorliegend ein bestimmungsgemäßer Betrieb oder Gebrauch desselben zu verstehen, in dem das Filtersystem das Fluid mit Hilfe des Filterelements filtert. Dass das Fluid im Betrieb des Filtersystems das Filtermedium "direkt" anströmt, bedeutet vorliegend insbesondere, dass das Fluid, bevor dieses das Filtermedium anströmt, nicht umgelenkt oder abgelenkt wird. Das Fluid wird somit umlenkungsfrei oder ablenkungsfrei zu dem Filterelement, insbesondere zu dem Filtermedium, hingeleitet. Insbesondere strömt das Fluid das Filtermedium umlenkungsfrei oder ablenkungsfrei an.

Insbesondere kann "direkt" auch bedeuten, dass das Fluid senkrecht auf dem Filtermedium auftrifft oder senkrecht gegen dieses strömt. Unter "senkrecht" ist vorliegend insbesondere ein Winkel von 90° ± 10°, bevorzugt von 90° ± 5°, weiter bevorzugt von 90° ± 3°, weiter bevorzugt von 90° ± 1°, weiter bevorzugt von genau 90°, zu verstehen. Insbesondere können die Begriffe "senkrecht" und "im Wesentlichen senkrecht" beliebig gegeneinander getauscht werden. Das Fluid kann somit im Wesentlichen senkrecht auf das Filtermedium auftreffen.

Eine Symmetrieachse des Fluideinlasses verläuft durch den Stabilisierungsring hindurch. Insbesondere ist der Fluideinlass rotationssymmetrisch zu der Symmetrieachse aufgebaut. Der Stabilisierungsring ist insbesondere derart angeordnet, dass die Symmetrieachse entlang der Längsrichtung betrachtet mittig durch den Stabilisierungsring verläuft.

Die Symmetrieachse des Fluideinlasses ist senkrecht zu einer Symmetrieachse des Filterelements angeordnet. Unter "senkrecht" ist vorliegend ein Winkel von bevorzugt 90° ± 10°, weiter bevorzugt von 90° ± 5°, weiter bevorzugt von 90° ± -3°, weiter bevorzugt von 90° ± 1°, weiter bevorzugt von genau 90°, zu verstehen. Das Filterelement ist bevorzugt rotationssymmetrisch zu seiner Symmetrieachse aufgebaut.

In Ausführungsformen umfasst das Filterelement eine erste Endscheibe und eine zweite Endscheibe, wobei das Filtermedium zwischen der ersten Endscheibe und der zweiten Endscheibe angeordnet ist, und wobei der Stabilisierungsring zwischen der ersten Endscheibe und der zweiten Endscheibe, insbesondere mittig oder außermittig zwischen der ersten Endscheibe und der zweiten Endscheibe angeordnet ist. Vorzugweise sind die erste Endscheibe und die zweite Endscheibe mit dem Filtermedium verklebt oder an dieses angegossen. "Außermittig" bedeutet vorliegend, dass der Stabilisierungsring entweder näher an der ersten Endscheibe als an der zweiten Endscheibe oder näher an der zweiten Endscheibe als an der ersten Endscheibe platziert ist.

In Ausführungsformen ist genau ein Stabilisierungsring vorgesehen. Alternativ können auch mehrere Stabilisierungsringe vorgesehen sein, wobei zumindest einer der Stabilisierungsringe innerhalb des Anströmquerschnitts des Fluideinlasses angeordnet ist.

In Ausführungsformen ist der Stabilisierungsring auf das Filtermedium aufgeklebt. Insbesondere ist der Stabilisierungsring auf die Faltenspitzen der Falten des Filtermediums aufgeklebt. Mit Hilfe des Stabilisierungsrings können die Faltenspitzen gleichmäßig voneinander beabstandet positioniert gehalten werden.

In Ausführungsformen umfasst der Stabilisierungsring ein Band, eine Schnur und/oder einen Schmelzklebstoff. Der Stabilisierungsring ist beispielsweise ein auf das Filtermedium aufgeklebtes Band oder eine aufgeklebte Schnur. Beispielsweise kann der Stabilisierungsring eine um die Symmetrieachse des Filterelements vollständig umlaufende Klebstoffraupe oder Leimraupe oder dergleichen sein. Insbesondere kann der Stabilisierungsring schmelzklebstoffgetränkte Fäden, beispielsweise zumindest drei derartige Fäden, oder ein schmelzklebstoffgetränktes Band aufweisen.

In Ausführungsformen ist das Filterelement im Querschnitt kreiszylinderförmig oder oval. Für den Fall, dass das Filterelement oval ist, ist dieses bevorzugt nicht rotationssymmetrisch zu der Symmetrieachse aufgebaut. Das Filterelement kann im Querschnitt grundsätzlich eine beliebige Geometrie aufweisen.

Das Fluid strömt im Betrieb des Filtersystems senkrecht gegen das Filtermedium. Wie zuvor erwähnt, kann das Fluid im Betrieb des Filtersystems auch im Wesentlichen senkrecht gegen das Filtermedium strömen. Insbesondere strömt das Fluid im Betrieb des Filtersystems senkrecht zu der Symmetrieachse des Filterelements gegen das Filtermedium.

In Ausführungsformen strömt das Fluid im Betrieb des Filtersystems durch den Anströmquerschnitt hindurch gegen das Filtermedium. Das Fluid tritt somit insbesondere durch den Anströmquerschnitt in das Filtergehäuse ein.

In Ausführungsformen strömt das Fluid im Betrieb durch den Anströmquerschnitt in Bezug auf die Längsrichtung gesehen radial in das Filtergehäuse ein und/oder radial das Filterelement bzw. Filtermedium an. Dazu ist bevorzugt der Fluideinlass radial am Filtergehäuse angeordnet. Ebenfalls bevorzugt kann der Fluideinlass, bevorzugt der gesamte Querschnitt des Fluideinlasses, axial in Bezug auf die Längsrichtung des Filterelements und/oder Filtergehäuses zwischen den axialen Enden oder ggf. zwischen zwei Endscheiben des Filterelements angeordnet sein.

Ferner wird ein Filterelement eines derartigen Filtersystems vorgeschlagen. Das Filterelement ist, wie zuvor erwähnt, insbesondere ein Luftfilterelement. Das Filterelement umfasst die erste Endscheibe und die zweite Endscheibe, zwischen denen das Filtermedium angeordnet ist.

### Kurze Beschreibung der Zeichnungen

Es zeigt dabei:
- Fig. 1:: eine schematische Aufsicht einer Ausführungsform eines Filtersystems;
- Fig. 2:: eine weitere schematische Aufsicht des Filtersystems gemäß Fig. 1;
- Fig. 3:: eine schematische Schnittansicht des Filtersystems gemäß der Schnittlinie III-III der Fig. 1;
- Fig. 4:: eine weitere schematische Schnittansicht des Filtersystems gemäß der Schnittlinie IV-IV der Fig. 2;
- Fig. 5:: eine weitere schematische Schnittansicht des Filtersystems gemäß der Schnittlinie IV-IV der Fig. 2;
- Fig. 6:: eine weitere schematische Schnittansicht des Filtersystems gemäß der Schnittlinie IV-IV der Fig. 2;
- Fig. 7:: die Detailansicht VII gemäß Fig. 3;
- Fig. 8:: die Detailansicht IIX gemäß Fig. 6;
- Fig. 9:: eine schematische perspektivische Ansicht einer Ausführungsform eines Filtergehäuses für das Filtersystem gemäß Fig. 1;
- Fig. 10:: eine schematische perspektivische Ansicht einer Ausführungsform eines Filterelements für das Filtersystem gemäß Fig. 1; und
- Fig. 11:: eine schematische Seitenansicht des Filterelements gemäß Fig. 10.

In den Figuren sind gleiche oder funktionsgleiche Elemente, sofern nichts anderes angegeben ist, mit denselben Bezugszeichen versehen worden.

### Ausführungsform(en) der Erfindung

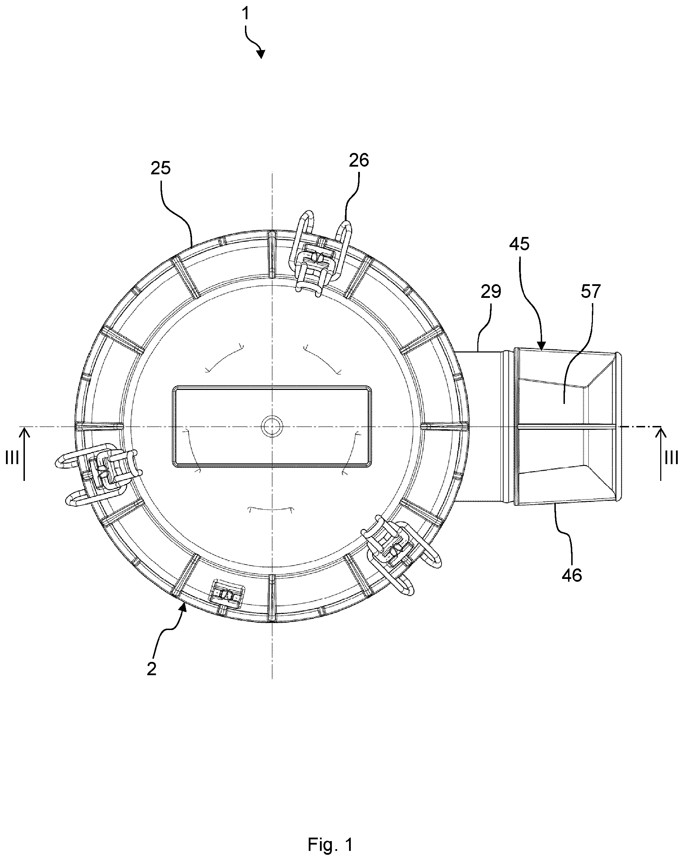

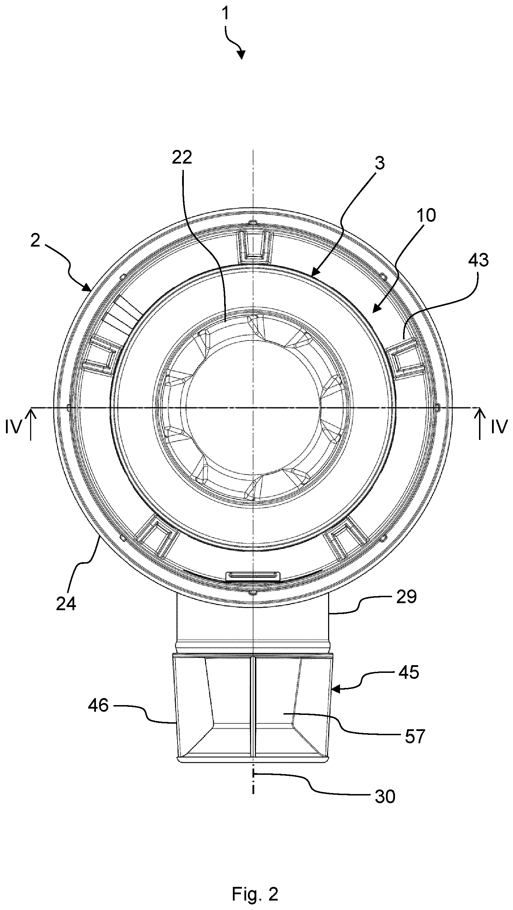

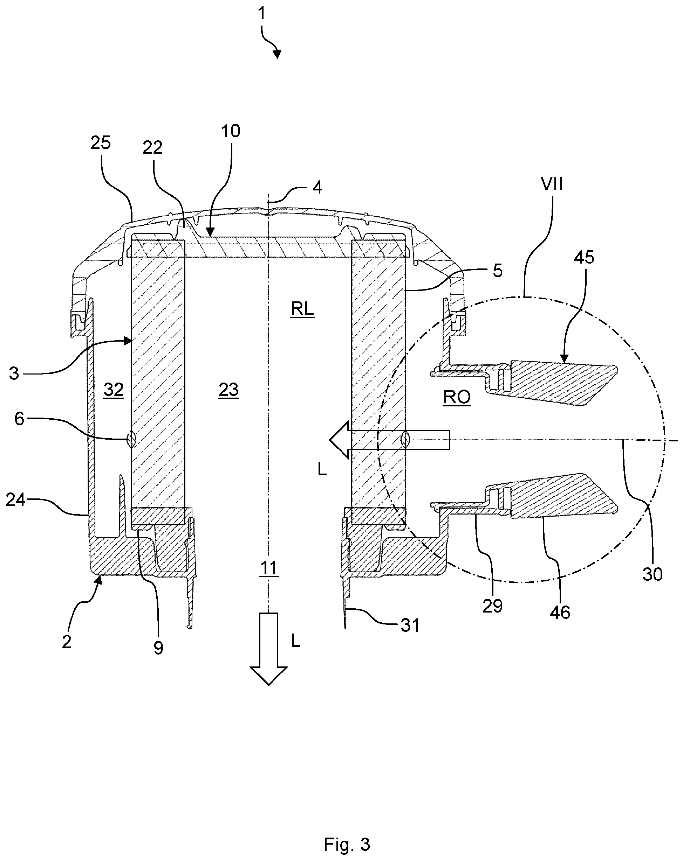

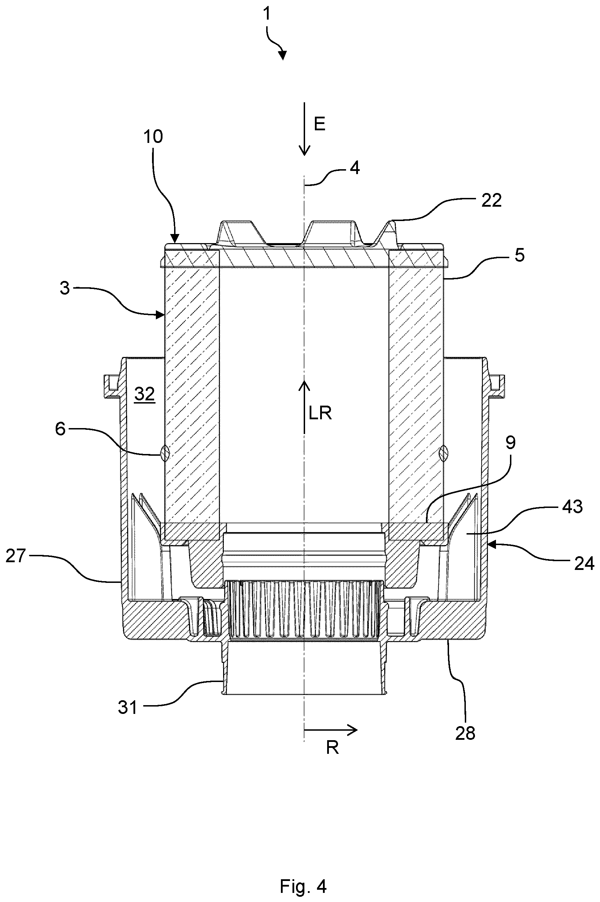

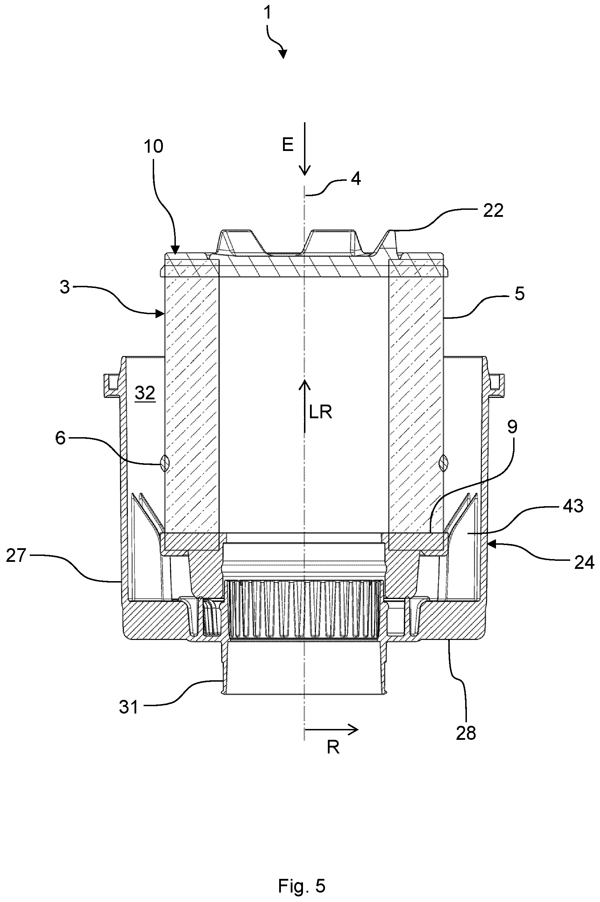

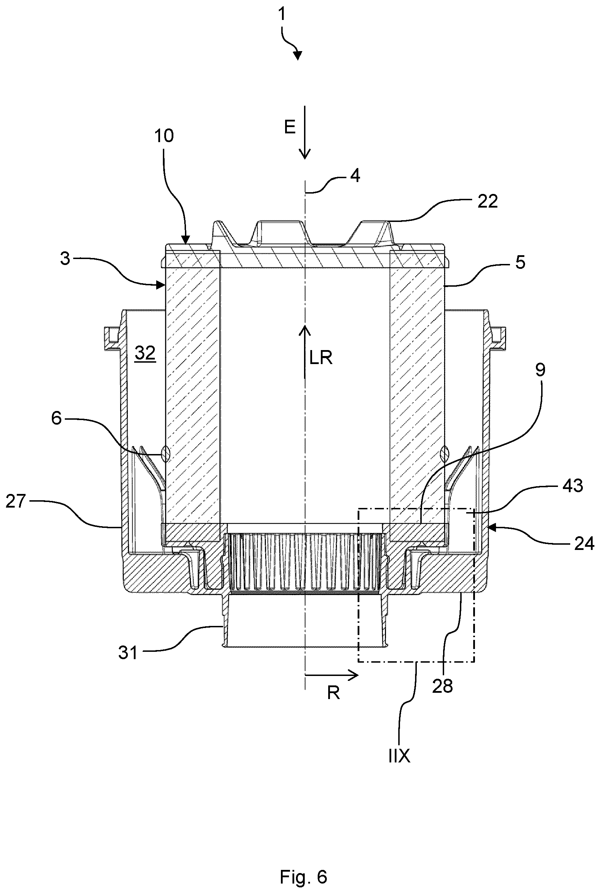

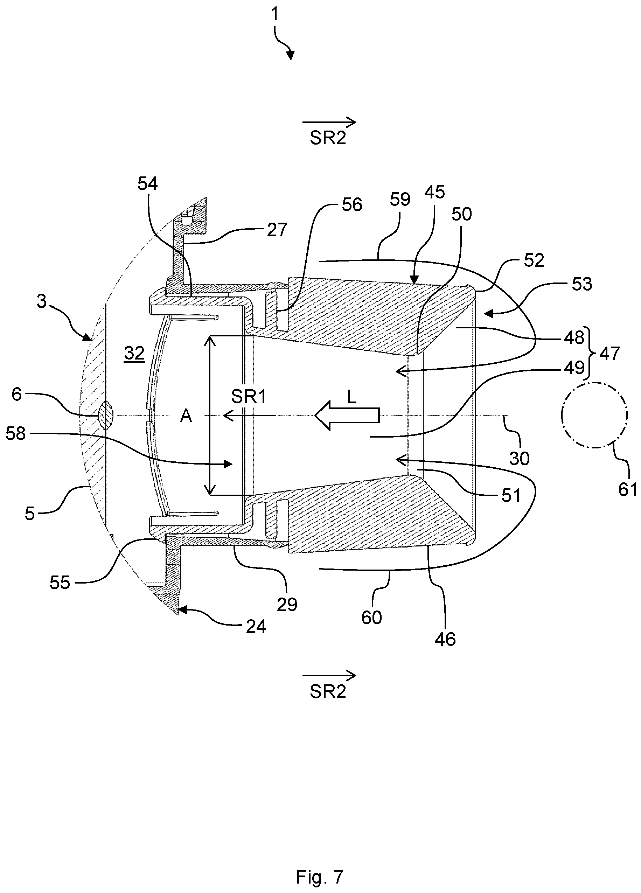

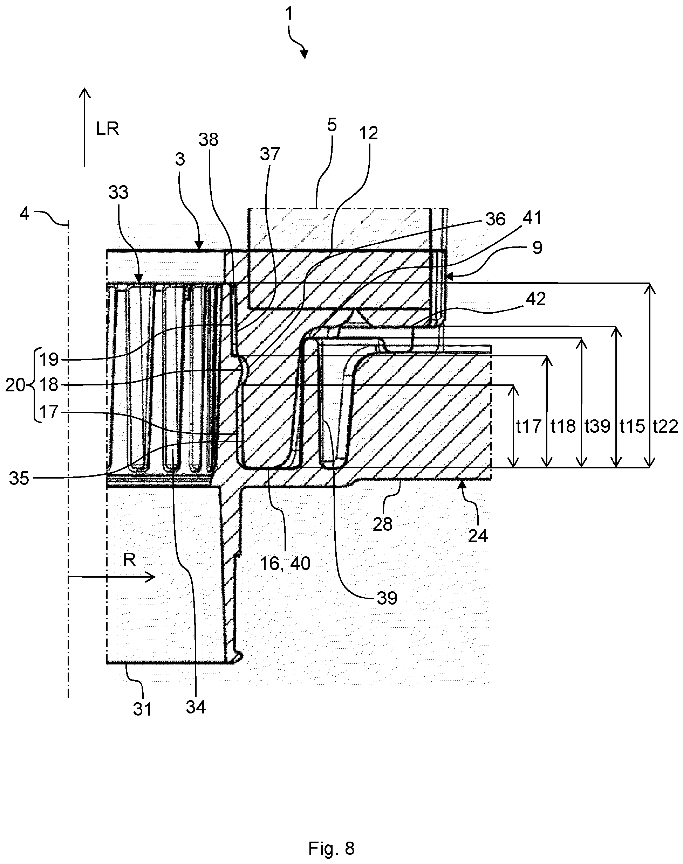

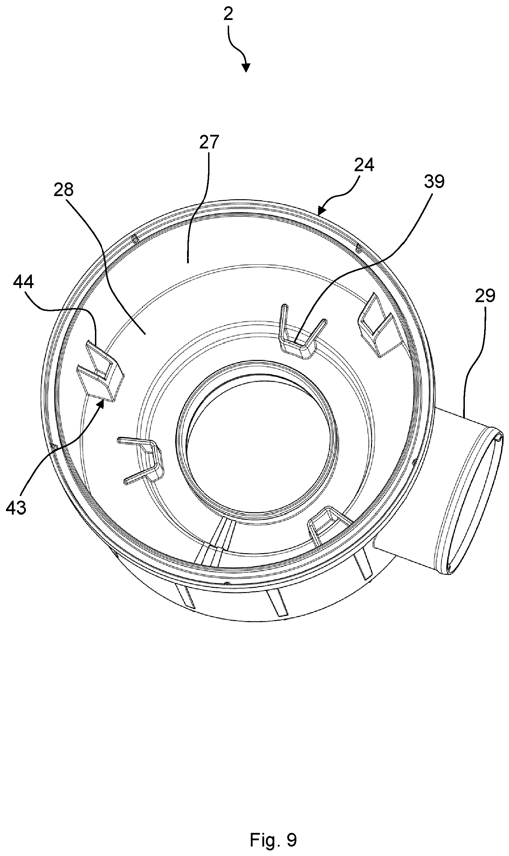

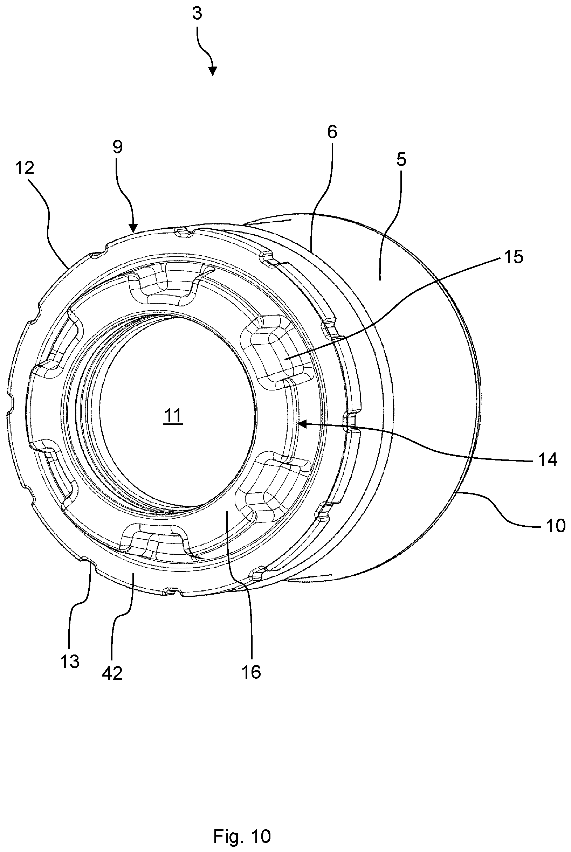

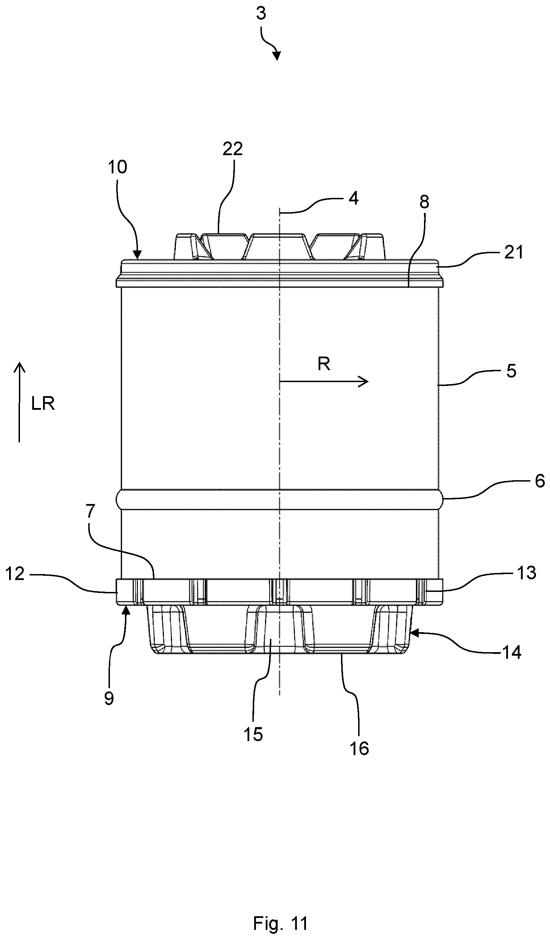

Fig. 1 zeigt eine schematische Aufsicht einer Ausführungsform eines Filtersystems 1. Fig. 2 zeigt eine weitere schematische Aufsicht des Filtersystems 1. Fig. 3 zeigt eine schematische Schnittansicht des Filtersystems 1 gemäß der Schnittlinie III-III der Fig. 1. Fig. 4 zeigt eine weitere schematische Schnittansicht des Filtersystems 1 gemäß der Schnittlinie IV-IV der Fig. 2. Fig. 5 zeigt eine weitere schematische Schnittansicht des Filtersystems 1 gemäß der Schnittlinie IV-IV der Fig. 2. Fig. 5 zeigt eine weitere schematische Schnittansicht des Filtersystems 1 gemäß der Schnittlinie IV-IV der Fig. 2. Fig. 6 zeigt eine weitere schematische Schnittansicht des Filtersystems 1 gemäß der Schnittlinie IV-IV der Fig. 2. Fig. 7 zeigt die Detailansicht VII gemäß Fig. 3. Fig. 8 zeigt die Detailansicht IIX gemäß Fig. 6. Fig. 9 zeigt eine schematische perspektivische Ansicht einer Ausführungsform eines Filtergehäuses 2 für das Filtersystem 1. Fig. 10 zeigt eine schematische perspektivische Ansicht einer Ausführungsform eines Filterelements 3 für das Filtersystem 1. Fig. 11 zeigt eine schematische Seitenansicht des Filterelements 3. Nachfolgend wird auf Fig. 1 bis 11 gleichzeitig Bezug genommen.

Das Filtersystem 1 kann auch als Filteranordnung bezeichnet werden. Das Filtersystem 1 findet vorzugsweise als Ansaugluftfilter für Druckluftkompressoren Anwendung. Alternativ kann das Filtersystem 1 jedoch auch als Ansaugluftfilter für Brennkraftmaschinen, beispielsweise in Kraftfahrzeugen, Lastkraftwagen, Baufahrzeugen, Wasserfahrzeugen, Schienenfahrzeugen, landwirtschaftlichen Maschinen bzw. Fahrzeugen oder Luftfahrzeugen Anwendung finden. Das Filtersystem 1 kann auch bei immobilen Anwendungen, beispielsweise in der Gebäudetechnik, Anwendung finden. Das Filterelement 3 ist insbesondere dazu geeignet, Ansaugluft eines Druckluftkompressors zu filtern. Vorzugsweise ist das Filterelement 3 ein Luftfilterelement.

Das Filterelement 3 ist rotationssymmetrisch zu einer Mittel- oder Symmetrieachse 4 aufgebaut. Das Filterelement 3 umfasst ein Filtermedium 5, das zylinderförmig ist. Das Filtermedium 5 ist rotationssymmetrisch zu der Symmetrieachse 4 aufgebaut. Beispielsweise kann das Filtermedium 5 ringförmig geschlossen sein und in Form eines sternförmig gefalteten Filterbalges vorliegen. Das Filtermedium 5 ist somit vorzugsweise gefaltet.

Das gefaltete Filtermedium 5 kann zur Stabilisierung desselben mit einem Stabilisierungsring 6 versehen sein. Der Stabilisierungsring 6 kann auch als Fixierwickel bezeichnet werden. Der Stabilisierungsring 6 ist beispielsweise ein auf das Filtermedium 5 aufgeklebtes Band oder eine aufgeklebte Schnur. Der Stabilisierungsring 6 kann eine um die Symmetrieachse 4 vollständig um das Filtermedium 5 umlaufende Klebstoffraupe oder Leimraupe oder dergleichen sein. Insbesondere kann der Stabilisierungsring 6 einen Schmelzklebstoff und/oder schmelzklebstoffgetränkte Fäden, beispielsweise zumindest drei derartige Fäden, aufweisen. Der Stabilisierungsring 6 dient dazu, Falten des gefalteten Filtermediums 5 zu stabilisieren und so deren Abstand zueinander gleich zu halten. Der Stabilisierungsring 6 ist entlang einer Längsrichtung LR des Filterelements 3 betrachtet außermittig an dem Filtermedium 5 platziert. Eine mittige Positionierung wäre ebenfalls denkbar, in diesem Fall wäre eine Positionierung von Lufteinlass 29 bzw. Symmetrieachse 30 auf gleicher axialer Position in Bezug auf die Längsrichtung LR bevorzugt (analog Fig. 7).

Dabei ist die Längsrichtung LR entlang der Symmetrieachse 4 orientiert. In der Orientierung der Fig. 11 kann die Längsrichtung LR von unten nach oben orientiert sein. Die Längsrichtung LR kann jedoch auch umgekehrt orientiert sein. Der Stabilisierungsring 6 ist dabei außenseitig an dem Filtermedium 5 vorgesehen. "Außermittig" bedeutet vorliegend, dass der Stabilisierungsring 6 bezüglich einer ersten Stirnseite 7 und einer zweiten Stirnseite 8 des gefalteten Filtermediums 5 nicht mittig zwischen den beiden Stirnseiten 7, 8 angeordnet ist, sondern beispielsweise näher an der ersten Stirnseite 7 platziert ist als an der zweiten Stirnseite 8. Insbesondere ist genau ein ringförmig vollständig um die Symmetrieachse 4 umlaufender Stabilisierungsring 6 vorgesehen.

Das Filtermedium 5 ist beispielsweise ein Filterpapier, ein Filtergewebe, ein Filtergelege oder ein Filtervlies. Insbesondere kann das Filtermedium 5 in einem Spinnvlies- oder Meltblown-Verfahren hergestellt sein oder eine derartige, auf einem Vlies- oder Celluloseträger aufgebrachte Faserlage umfassen. Weiter kann das Filtermedium 5 verfilzt oder vernadelt sein. Das Filtermedium 5 kann Naturfasern, wie Cellulose oder Baumwolle, oder Kunstfasern, beispielsweise aus Polyester, Polyvinylsulfit oder Polytetrafluorethylen, aufweisen. Fasern des Filtermediums 5 können bei der Verarbeitung in, schräg und/oder quer oder ungeordnet zu einer Maschinenrichtung orientiert sein.

Das Filterelement 3 weist eine erste, insbesondere offene, Endscheibe 9 auf, die an der ersten Stirnseite 7 des Filtermediums 5 vorgesehen ist. Ferner umfasst das Filterelement 3 eine zweite, insbesondere geschlossene, Endscheibe 10, welche an der zweiten Stirnseite 8 des Filtermediums 5 vorgesehen ist. Das heißt, das Filtermedium 5 ist zwischen der ersten Endscheibe 9 und der zweiten Endscheibe 10 platziert. Die Endscheiben 9, 10 können beispielsweise aus einem, insbesondere in Gießschalen gegossenen, bevorzugt geschäumten, Polyurethanmaterial gefertigt sein. Die Endscheiben 9, 10 können an das Filtermedium 5 angegossen sein. Die erste Endscheibe 9 ist mit der ersten Stirnseite 7 verbunden. Die zweite Endscheibe 10 ist mit der zweiten Stirnseite 8 verbunden.

Die erste Endscheibe 9 umfasst einen mittig angeordneten Durchbruch 11. Der Durchbruch 11 kann eine Ausströmöffnung des Filterelements 3 sein. Die erste Endscheibe 9 umfasst einen plattenförmigen Basisabschnitt 12, welcher mit der ersten Stirnseite 7 des Filterelements 3 verbunden ist. Der Durchbruch 11 durchbricht den Basisabschnitt 12. Außenseitig an dem Basisabschnitt 12 kann eine Vielzahl an Nuten oder Ausnehmungen 13 vorgesehen sein, welche gleichmäßig um die Symmetrieachse 4 herum verteilt angeordnet sind.

Der ersten Stirnseite 7 des Filtermediums 5 abgewandt erstreckt sich ein ringförmig um die Symmetrieachse 4 umlaufender Positionier- und Dichtabschnitt 14 der ersten Endscheibe 9 aus dem Basisabschnitt 12 heraus. Mit Hilfe des Positionier- und Dichtabschnitts 14 kann das Filterelement 3 in dem Filtergehäuse 2 positioniert und gegenüber diesem abgedichtet werden wie nachfolgend noch erläutert wird. Der Durchbruch 11 durchbricht auch den Positionier- und Dichtabschnitt 14.

Außenseitig, das heißt dem Durchbruch 11 abgewandt, ist an dem Positionier- und Dichtabschnitt 14 eine Vielzahl an Positionierausnehmungen 15 vorgesehen, von denen in Fig. 10 und 11 jeweils lediglich eine mit einem Bezugszeichen versehen ist. Die Positionierausnehmungen 15 sind gleichmäßig um die Symmetrieachse 4 herum verteilt angeordnet. Beispielsweise sind sechs derartige Positionierausnehmungen 15 vorgesehen. Die Anzahl der Positionierausnehmungen 15 ist jedoch beliebig. Ausgehend von einer ringförmigen Stirnfläche 16 des Positionier- und Dichtabschnitts 14 weisen die Positionierausnehmungen 15 entlang der Symmetrieachse 4 bzw. entlang der Längsrichtung LR betrachtet eine Tiefe t15 auf (Fig. 8). Die Positionierausnehmungen 15 erstrecken sich von der Stirnfläche 16 ausgehend in Richtung des Basisabschnitts 12.

Wie Fig. 8 weiterhin zeigt, weist die erste Endscheibe 9 bzw. der Positionier- und Dichtabschnitt 14 innenseitig, das heißt dem Durchbruch 11 zugewandt, eine zylinderförmige Dichtfläche 17 auf, welche rotationssymmetrisch zu der Symmetrieachse 4 aufgebaut ist und vollständig um diese umläuft. Die Dichtfläche 17 ist geeignet, mit dem Filtergehäuse 2 wechselzuwirken, um so die erste Endscheibe 9 gegenüber dem Filtergehäuse 2 fluiddicht abzudichten. Hierbei kann die Dichtfläche 17 radial verpresst werden. "Radial" bedeutet dabei in Richtung einer Radialrichtung R, die senkrecht zu der Symmetrieachse 4 orientiert ist und von dieser wegweist.

Die Dichtfläche 17 erstreckt sich ausgehend von der Stirnfläche 16 entlang der Längsrichtung LR um eine Tiefe t17 in den Durchbruch 11 hinein. An die Dichtfläche 17 schließt sich eine ringförmig um die Symmetrieachse 4 umlaufende Ringnut oder Dichtnut 18 an. Ausgehend von der Stirnfläche 16 entlang der Längsrichtung LR endet die Dichtnut 18 in einer Tiefe t18. Dabei ist die Tiefe t18 kleiner als die Tiefe t15. Die Tiefe t17 ist kleiner als die Tiefe t15. Entlang der Längsrichtung LR betrachtet schließt sich an die Dichtnut 18 eine um die Symmetrieachse 4 umlaufende zylinderförmige Fläche 19 an. Bezüglich der Radialrichtung R betrachtet weist die Dichtfläche 17 einen kleineren Durchmesser auf als die Fläche 19. Die Dichtfläche 17, Dichtnut 18 und die Fläche 19 bilden eine Dichtungsschnittstelle oder Schnittstelle 20 des Filterelements 3. Die Schnittstelle 20 kann auch als erste Schnittstelle oder als Filterelementschnittstelle bezeichnet werden. Die Schnittstelle 20 ist geeignet, mit dem Filtergehäuse 2 wechselzuwirken. Die Schnittstelle 20 weist ausgehend von der Stirnfläche 16 des Positionier- und Dichtabschnitts 14 eine Tiefe t20 auf. Die Schnittstelle 20 kann auch die Positionierausnehmungen 15 umfassen.

Nun zurückkehrend zu Fig. 11 weist die zweite Endscheibe 10 einen plattenförmigen Basisabschnitt 21 auf, welcher rotationssymmetrisch zu der Symmetrieachse 4 aufgebaut ist und die zweite Stirnseite 8 des Filtermediums 5 fluiddicht verschließt. Der zweiten Stirnseite 8 abgewandt erstrecken sich aus dem Basisabschnitt 21 heraus Positionierelemente 22, von denen in Fig. 11 nur eines mit einem Bezugszeichen versehen ist. Die Anzahl der Positionierelemente 22 ist beliebig. Beispielsweise können fünf derartige Positionierelemente 22 vorgesehen sein, welche gleichmäßig um die Symmetrieachse 4 herum verteilt angeordnet sind.

Die Funktion des Filterelements 3 wird nachfolgend anhand Fig. 3 erläutert. Zu reinigendes Fluid L, beispielsweise Luft, tritt von einer Rohseite RO des Filterelements 3 durch das Filtermedium 5 hindurch zu einer von dem Filtermedium 5 umgebenen Reinseite RL des Filterelements 3. Das heißt, das Fluid L strömt durch das Filtermedium 5 hindurch in einem von dem Filtermedium 5 umgebenen Innenraum 23 des Filterelements 3. Aus dem Filterelement 3 strömt das gereinigte Fluid L durch den Durchbruch 11 der ersten Endscheibe 9 als gefiltertes Fluid L aus.

Nun zurückkehrend zu dem Filtergehäuse 2 umfasst dieses ein Gehäuseunterteil 24 und ein Gehäuseoberteil 25. Das Gehäuseoberteil 25 kann auch als Gehäusedeckel bezeichnet werden. Das Gehäuseoberteil 25 ist zum Wechsel des Filterelements 3 von dem Gehäuseunterteil 24 demontierbar und wieder an diesem montierbar. Zwischen dem Gehäuseunterteil 24 und Gehäuseoberteil 25 kann ein Dichtelement, beispielsweise in Form eines O-Rings, vorgesehen sein. Das Gehäuseoberteil 25 kann Schnellverschlüsse 26, von denen in Fig. 1 nur einer mit einem Bezugszeichen versehen ist, aufweisen. Die Anzahl der Schnellverschlüsse 26 ist beliebig. Beispielsweise sind drei derartige Schnellverschlüsse 26 vorgesehen, die gleichmäßig um die Symmetrieachse 4 herum verteilt angeordnet sind.

Mit Hilfe der Schnellverschlüsse 26 kann das Gehäuseoberteil 25 lösbar mit dem Gehäuseunterteil 24 verbunden werden. Hierzu können an dem Gehäuseunterteil 24 Eingriffsabschnitte, beispielsweise in Form von Haken oder Absätzen, vorgesehen sein, in welche die Schnellverschlüsse 26 zum Verbinden des Gehäuseoberteils 25 mit dem Gehäuseunterteil 24 formschlüssig eingreifen. Eine formschlüssige Verbindung entsteht durch das Ineinander- oder Hintergreifen von mindestens zwei Verbindungspartnern, vorliegend den Schnellverschlüssen 26 und Eingriffsabschnitten. Das Gehäuseoberteil 25 umfasst ferner Eingriffsabschnitte, welche mit den Positionierelementen 22 der zweiten Endscheibe 10 des Filterelements 3 derart wechselwirken können, dass die Positionierelemente 22 formschlüssig in die Eingriffsabschnitte des Gehäuseoberteils 25 eingreifen. Beispielsweise ist das Gehäuseoberteil 25 ein Kunststoffspritzgussbauteil.

Das Gehäuseunterteil 24 ist topfförmig ausgebildet und umfasst einen zylinderförmigen Basisabschnitt 27, welcher rotationssymmetrisch zu der Symmetrieachse 4 aufgebaut ist. Stirnseitig ist der Basisabschnitt 27 mit Hilfe eines Bodenabschnitts 28 verschlossen. Der Basisabschnitt 27 und Bodenabschnitt 28 sind einteilig, insbesondere materialeinstückig, ausgebildet. "Einteilig" oder "einstückig" bedeutet vorliegend, dass der Basisabschnitt 27 und Bodenabschnitt 28 ein gemeinsames Bauteil bilden und nicht aus unterschiedlichen Einzelbauteilen zusammengesetzt sind. "Materialeinstückig" bedeutet vorliegend, dass der Basisabschnitt 27 und Bodenabschnitt 28 durchgehend aus demselben Material gefertigt sind. Beispielsweise ist das Gehäuseunterteil 24 ein Kunststoffspritzgussbauteil.

Das Gehäuseunterteil 24 umfasst einen Fluideinlass 29, der rohrförmig ausgebildet ist. Der Fluideinlass 29 ist rotationssymmetrisch zu einer Mittel- oder Symmetrieachse 30 aufgebaut. Die Symmetrieachse 30 ist senkrecht zu der Symmetrieachse 4 platziert. Durch den Fluideinlass 29 kann dem Filterelement 3 rohseitig das zu reinigende Fluid L zugeführt werden. Ferner umfasst das Gehäuseunterteil 24 einen Fluidauslass 31, der an dem Bodenabschnitt 28 vorgesehen ist. Der Fluidauslass 31 ist rohrförmig und ist rotationssymmetrisch zu der Symmetrieachse 4 aufgebaut. Durch den Fluidauslass 31 kann das gereinigte Fluid L von dem Filterelement 3 abgeführt werden.

Der Fluidauslass 31 erstreckt sich ausgehend von dem Bodenabschnitt 28 des Gehäuseunterteils 24 nach außen in Richtung von dem Filterelement 3 weg. Ferner erstreckt sich als Verlängerung des Fluidauslasses 31 in einen Innenraum 32 (Fig. 3 bis 6) des Gehäuseunterteils eine rohrförmige Schnittstelle 33 (Fig. 8) hinein, welche mit der Schnittstelle 20 des Filterelements 3 wechselwirkt, um das Filterelement 3 gegenüber dem Gehäuseunterteil 24 abzudichten. Die Schnittstelle 33 ist rohrförmig aufgebaut und rotationssymmetrisch zu der Symmetrieachse 4 ausgebildet. Die Schnittstelle 33 kann auch als zweite Schnittstelle oder als Filtergehäuseschnittstelle bezeichnet werden.

Innenseitig an der Schnittstelle 33, das heißt der Schnittstelle 20 des Filterelements 3 abgewandt, ist an der Schnittstelle 33 eine Störkontur 34 vorgesehen. Die Störkontur 34 ist beispielsweise als eine Vielzahl entlang der Längsrichtung LR verlaufender Nuten ausgebildet. Die Störkontur 34 verhindert, dass ein nicht zu dem Filtersystem 1 gehörendes Filterelement an der Schnittstelle 33 montiert werden kann, welches innenseitig gegenüber der Schnittstelle 33 radial abdichten würde.

Die Schnittstelle 33 erstreckt sich, wie zuvor erwähnt, aus dem Bodenabschnitt 28 in den Innenraum 32 des Gehäuseunterteils 24 hinein. Dabei umfasst die Schnittstelle 33 eine zylinderförmige und rotationssymmetrisch zu der Symmetrieachse 4 aufgebaute Dichtfläche 35, welche mit der Dichtfläche 17 des Filterelements 3 wechselwirkt. Insbesondere sind die Dichtflächen 17, 35 in der Radialrichtung R betrachtet radial miteinander verpresst.

Entlang der Längsrichtung LR betrachtet schließt sich an die Dichtfläche 35 eine ringförmig um die Symmetrieachse 4 umlaufende Nase oder Dichtrippe 36 an. Die Dichtrippe 36 ist dazu geeignet, in die Dichtnut 18 der Schnittstelle 20 formschlüssig einzugreifen. In der Längsrichtung LR betrachtet nach der Dichtrippe 36 ist eine zylinderförmige Zentrierfläche 37 vorgesehen. Die Zentrierfläche 37 ist geeignet, die Dichtfläche 17 des Filterelements 3 bei dem Einbau desselben in das Gehäuseunterteil 24 bezüglich der Symmetrieachse 4 zu zentrieren bzw. zu führen. Zwischen der Fläche 19 und der Zentrierfläche 37 ist ein Spalt 38, insbesondere ein Luftspalt, vorgesehen.

Wie Fig. 9 zeigt, sind an dem Bodenabschnitt 28 des Gehäuseunterteils 24 Störgeometrien 39 vorgesehen, von denen in Fig. 9 nur eine mit einem Bezugszeichen versehen ist. Beispielsweise sind drei oder fünf derartige Störgeometrien 39 vorgesehen, die gleichmäßig um die Symmetrieachse 4 herum verteilt angeordnet sind. Die Anzahl der Störgeometrien 39 ist beliebig. Die Störgeometrien 39 sind dazu geeignet, formschlüssig in die Positionierausnehmungen 15 der ersten Endscheibe 9 einzugreifen. Die Störgeometrien 39 ragen ausgehend von dem Bodenabschnitt 28 in den Innenraum 32 hinein. Die Störgeometrien 39 verhindern ferner den Einbau eines nicht zu dem Filtersystem 1 passenden Filterelements ohne Positionierausnehmungen 15 in das Gehäuseunterteil 24.

Von einer Stirnfläche 40 (Fig. 8) des Bodenabschnitts 28, an der die Stirnfläche 16 anliegt, aus gesehen weist jede Störgeometrie 39 entlang der Längsrichtung LR betrachtet eine Tiefe t39 auf. Dabei ist die Tiefe t39 größer als die Tiefe t18 und kleiner als die Tiefe t15. Jede Störgeometrie 39 umfasst eine Stirnfläche 41, die parallel zu der Stirnfläche 40 orientiert und beabstandet von dieser angeordnet ist. Der Basisabschnitt 12 der ersten Endscheibe 9 umfasst eine Stirnfläche 42. Stirnflächen 41, 42 sind parallel zueinander und beabstandet voneinander positioniert.

In dem Gehäuseunterteil 24 sind ferner Zentriergeometrien 43 angeformt, von denen in Fig. 2, 9 jeweils nur eine mit einem Bezugszeichen versehen ist. Es können beispielsweise drei oder fünf derartige Zentriergeometrien 43 vorgesehen sein, die gleichmäßig um die Symmetrieachse 4 herum verteilt angeordnet sind. Jede Zentriergeometrie 43 umfasst eine schräg zu der Symmetrieachse 4 geneigte Oberkante 44.

Der Einbau des Filterelements 3 in das Filtergehäuse 2 wird nachfolgend anhand Fig. 4 bis 6 und 8 erläutert. Zunächst wird das Filterelement 3 in einer Einführrichtung E, die entlang der Symmetrieachse 4 orientiert ist, in das Gehäuseunterteil 24 eingeschoben. Die Einführrichtung E ist dabei von der zweiten Endscheibe 10 in Richtung der ersten Endscheibe 9 orientiert. Die Längsrichtung LR und die Einführrichtung E können gegensätzlich orientiert sein. Dabei erfolgt eine Vorzentrierung des Filterelements 3 mit Hilfe des plattenförmigen Basisabschnitts 12 der ersten Endscheibe 9 an den Zentriergeometrien 43. Mit Hilfe der Zentriergeometrien 43 wird das Filterelement 3 bezüglich der Symmetrieachse 4 zentriert, so dass die Stirnfläche 16 des Positionier- und Dichtabschnitts 14 der ersten Endscheibe 9 auf den Stirnflächen 41 der Störgeometrien 39 aufliegt (Fig. 5). Das heißt, die Schnittstellen 20, 33 sind noch nicht in Eingriff miteinander.

Aus der in Fig. 5 gezeigten Position kann das Filterelement 3 nun um die Symmetrieachse 4 rotiert werden, bis die Störgeometrien 39 mit den Positionierausnehmungen 15 des Positionier- und Dichtabschnitts 14 fluchten, so dass das Filterelement 3 entlang der Einführrichtung E weiter in das Gehäuseunterteil 24 eingedrückt werden kann. Bei dem Verdrehen des Filterelements 3 um die Symmetrieachse 4 wird die Dichtfläche 17 der ersten Endscheibe 9 an der Zentrierfläche 37 der Schnittstelle 33 geführt und bezüglich der Symmetrieachse 4 zentriert. Sobald die Störgeometrien 39 in die Positionierausnehmungen 15 eingreifen, wird der Positionier- und Dichtabschnitt 14 derart elastisch verformt, dass die Dichtrippe 36 in die Dichtnut 18 formschlüssig eingreift. Gleichzeitig werden die Dichtflächen 17, 35 radial gegeneinander verpresst. Die Stirnflächen 16, 40 liegen aneinander an. Das Filterelement 3 ist in dem Gehäuseunterteil 24 montiert.

Das Filtersystem 1 umfasst weiterhin einen Schalldämpfer 45 (Fig. 1 bis 3 und 7), welcher an dem Fluideinlass 29 angebracht ist. Der Schalldämpfer 45 ist vorzugsweise ein einteiliges, insbesondere ein materialeinstückiges, Kunststoffbauteil. Der Schalldämpfer 45 kann ein Kunststoffspritzgussbauteil sein. Der Schalldämpfer 45 ist rotationssymmetrisch zu der Symmetrieachse 30 aufgebaut. Der Schalldämpfer 45 weist außenseitig eine Vielzahl an Fluidführungsrippen 46 auf, die parallel zu der Symmetrieachse 30 verlaufen. Die Fluidführungsrippen 46 sind außenseitig an einem rohrförmigen Basiskörper 47 des Schalldämpfers 45 vorgesehen. Durch den Schalldämpfer 45 hindurch wird dem Filterelement 3 das zu reinigende Fluid L zugeführt.

Der Basiskörper 47 weist einen kegelstumpfförmig geformten Einlass 48 sowie einen ebenfalls kegelstumpfförmig geformten Auslass 49 auf. Der Einlass 48 und Auslass 49 sind miteinander in Fluidverbindung. Der Einlass 48 und Auslass 49 sind dabei derart angeordnet, dass die kegelstumpfförmigen Geometrien derart positioniert sind, dass sich zwischen dem Einlass 48 und Auslass 49 eine mit einer Verrundung 50 verrundete Querschnittsverengung 51 ergibt. Der Einlass 48 ist dem Fluideinlass 29 abgewandt. Der Auslass 49 ist dem Fluideinlass 29 zugewandt. Der Einlass 48 und Auslass 49 bilden zusammen somit eine sanduhrförmige oder trompetenförmige Geometrie. Der Auslass 49 weist einen Anströmquerschnitt A des Fluideinlasses auf. Mit dem Anströmquerschnitt A wird das Filtermedium 5 angeströmt.

An dem Einlass 48 ist ferner eine Einlassverrundung 52 vorgesehen, die vollständig um die Symmetrieachse 30 umläuft. Die Einlassverrundung 52 läuft vollständig um eine Einlassöffnung 53 des Basiskörpers 47 um. Der Basiskörper 47 geht in einen rohrförmigen Befestigungsabschnitt 54 über. Der Befestigungsabschnitt 54 kann Schnapphaken 55 aufweisen, mit deren Hilfe der Schalldämpfer 45 mit dem Fluideinlass 29 formschlüssig verbunden ist. Zwischen dem Befestigungsabschnitt 54 und Basiskörper 47 ist eine vollständig um die Symmetrieachse 30 umlaufende Rippe 56 vorgesehen. Die Rippe 56 ist dabei senkrecht zu der Symmetrieachse 4 angeordnet. Die Rippe 56 ist in dem Fluideinlass 29 aufgenommen. Die Fluidführungsrippen 46 sind an einer Außenseite 57 (Fig. 1 und 2) des Basiskörpers 47 vorgesehen. Der Auslass 49 weist eine Auslassöffnung 58 auf. Ein Durchmesser der Auslassöffnung 58 ist kleiner als ein Durchmesser der Einlassöffnung 53.

Im Betrieb des Filtersystems 1 wird das zu filternde Fluid L um die Einlassverrundung 52 herum seitlich in die Einlassöffnung 53 und somit in den Einlass 48 eingesaugt, wie in Fig. 7 mit Hilfe von Pfeilen 59, 60 angedeutet. Das Fluid L strömt somit entlang der Fluidführungsrippen 46, die das Fluid dem Einlass 48 zuleiten. Durch den Basiskörper 47 strömt das Fluid L entlang einer, insbesondere ersten, Strömungsrichtung SR1. Die Strömungsrichtung SR1 ist von der Einlassöffnung 53 in Richtung des Filterelements 3 orientiert. Die Fluidführungsrippen 46 verlaufen entlang der oder parallel zu der Strömungsrichtung SR1.

Das Fluid L strömt außenseitig an dem Basiskörper 47 entlang der Fluidführungsrippen 46 in einer, insbesondere zweiten, Strömungsrichtung SR2. Die Strömungsrichtungen SR1, SR2 sind gegensätzlich orientiert. Die Strömungsrichtung SR2 ist entlang der Radialrichtung R orientiert. Die Strömungsrichtung SR1 hingegen ist entgegen der Radialrichtung R orientiert. Die Fluidführungsrippen 46 verlaufen auch entlang der Strömungsrichtung SR2.

Unmittelbar vor dem Einlass 48 ergibt sich ein Bereich 61, in dem das Fluid L im Wesentlichen keine Bewegung aufweist. Das heißt, das zu filternde Fluid L wird im Wesentlichen nur entlang der Fluidführungsrippen 46 in Richtung der Einlassverrundung 52 und um diese herum in den Einlass 48 eingesaugt. Das eingesaugte Fluid L prallt auf das Filtermedium 5, wobei der Stabilisierungsring 6 ein Bewegen von Falten des gefalteten Filtermediums 5 verhindert. Dabei ist der Stabilisierungsring 6 entlang der Längsrichtung LR betrachtet mittig in dem Anströmquerschnitt A des Fluideinlasses 29 platziert.

Insbesondere wird das Filtermedium 5 mit Hilfe des Stabilisierungsrings 6 vor Pulsationen geschützt. Hierdurch ergibt sich eine Geräuschreduktion. Der Stabilisierungsring 6 ist dabei bezüglich des Schalldämpfers 45 mittig angeordnet. Das heißt, die Symmetrieachse 30 verläuft bevorzugt durch den Stabilisierungsring 6 mittig hindurch. Die doppelte Konusform des Einlasses 48 und Auslasses 49 sorgt für die Schallreduktion.

### Bezugszeichen

- 1: Filtersystem
- 2: Filtergehäuse
- 3: Filterelement
- 4: Symmetrieachse
- 5: Filtermedium
- 6: Stabilisierungsring
- 7: Stirnseite
- 8: Stirnseite
- 9: Endscheibe
- 10: Endscheibe
- 11: Durchbruch
- 12: Basisabschnitt
- 13: Ausnehmung
- 14: Positionier- und Dichtabschnitt
- 15: Positionierausnehmung
- 16: Stirnfläche
- 17: Dichtfläche
- 18: Dichtnut
- 19: Fläche
- 20: Schnittstelle
- 21: Basisabschnitt
- 22: Positionierelement
- 23: Innenraum
- 24: Gehäuseunterteil
- 25: Gehäuseoberteil
- 26: Schnellverschluss
- 27: Basisabschnitt
- 28: Bodenabschnitt
- 29: Fluideinlass
- 30: Symmetrieachse
- 31: Fluidauslass
- 32: Innenraum
- 33: Schnittstelle
- 34: Störkontur
- 35: Dichtfläche
- 36: Dichtrippe
- 37: Zentrierfläche
- 38: Spalt
- 39: Störgeometrie
- 40: Stirnfläche
- 41: Stirnfläche
- 42: Stirnfläche
- 43: Zentriergeometrie
- 44: Oberkante
- 45: Schalldämpfer
- 46: Fluidführungsrippen
- 47: Basiskörper
- 48: Einlass
- 49: Auslass
- 50: Verrundung
- 51: Querschnittsverengung
- 52: Einlassverrundung
- 53: Einlassöffnung
- 54: Befestigungsabschnitt
- 55: Schnapphaken
- 56: Rippe
- 57: Außenseite
- 58: Auslassöffnung
- 59: Pfeil
- 60: Pfeil
- 61: Bereich

- A: Anströmquerschnitt
- E: Einführrichtung
- L: Fluid
- LR: Längsrichtung
- R: Radialrichtung
- RL: Reinseite
- RO: Rohseite
- SR1: Strömungsrichtung
- SR2: Strömungsrichtung
- t15: Tiefe
- t17: Tiefe
- t18: Tiefe
- t20: Tiefe
- t39: Tiefe

## Patentansprüche

1. Filtersystem (1) mit einem Filtergehäuse (2), welches einen Fluideinlass (29) zum Einlassen von Fluid (L) in das Filtergehäuse (2) umfasst, und einem entnehmbar in dem Filtergehäuse (2) aufgenommenen Filterelement (3), welches ein gefaltetes Filtermedium (5) und einen das Filtermedium (5) stabilisierenden Stabilisierungsring (6) umfasst, wobei der Stabilisierungsring (6) derart an dem Filtermedium (5) angebracht ist, dass der Stabilisierungsring (6) zumindest abschnittsweise innerhalb eines Anströmquerschnitts (A) des Fluideinlasses (29) angeordnet ist, wobei das Fluid (L) im Betrieb des Filtersystems (1) das Filtermedium (5) direkt anströmt, wobei der Stabilisierungsring (6) mittig in dem Anströmquerschnitt (A) angeordnet ist, wobei das Fluid (L) im Betrieb des Filtersystems (1) senkrecht gegen das Filtermedium (5) strömt, wobei eine Symmetrieachse (30) des Fluideinlasses (29) durch den Stabilisierungsring (6) hindurchverläuft, und wobei die Symmetrieachse (30) des Fluideinlasses (29) senkrecht zu einer Symmetrieachse (4) des Filterelements (3) angeordnet ist.

2. Filtersystem nach Anspruch 1, wobei das Filterelement (3) eine erste Endscheibe (9) und eine zweite Endscheibe (10) umfasst, wobei das Filtermedium (5) zwischen der ersten Endscheibe (9) und der zweiten Endscheibe (10) angeordnet ist, und wobei der Stabilisierungsring (6) mittig oder außermittig zwischen der ersten Endscheibe (9) und der zweiten Endscheibe (10) angeordnet ist.

3. Filtersystem nach Anspruch 1 oder 2, wobei genau ein Stabilisierungsring (6) vorgesehen ist.

4. Filtersystem nach einem der Ansprüche 1 - 3, wobei der Stabilisierungsring (6) auf das Filtermedium (1) aufgeklebt ist.

5. Filtersystem nach Anspruch 4, wobei der Stabilisierungsring (6) ein Band, eine Schnur und/oder einen Schmelzklebstoff umfasst.

6. Filtersystem nach einem der Ansprüche 1 - 5, wobei das Filterelement (3) im Querschnitt kreiszylinderförmig oder oval ist.

## Claims

1. A filter system (1) having a filter housing (2) comprising a fluid inlet (29) for allowing fluid (L) to enter the filter housing (2), and a filter element (3) removably accommodated in the filter housing (2), said filter element comprising a folded filter medium (5) and a stabilization ring (6) stabilizing the filter medium (5), wherein the stabilization ring (6) is attached to the filter medium (5) such that the stabilization ring (6) is disposed at least section-wise inside an inflow cross-section (A) of the fluid inlet (29), wherein the fluid (L) flows directly towards the filter medium (5) during operation of the filter system (1), wherein the stabilization ring (6) is disposed centrally in the inflow cross-section (A), wherein the fluid (L) flows perpendicularly against the filter medium (5) during operation of the filter system (1), wherein a symmetry axis (30) of the fluid inlet (29) extending through the stabilization ring (6), and wherein the symmetry axis (30) of the fluid inlet (29) is disposed perpendicularly to a symmetry axis (4) of the filter element (3).

2. The filter system according to claim 1, wherein the filter element (3) comprises a first end disc (9) and a second end disc (10), wherein the filter medium (5) is disposed between the first end disc (9) and the second end disc (10), and wherein the stabilization ring (6) is disposed centrally or eccentrically between the first end disc (9) and the second end disc (10).

3. The filter system according to claim 1 or 2, wherein precisely one stabilization ring (6) is provided.

4. The filter system according to one of the claims 1 to 3, wherein the stabilization ring (6) is glued to the filter medium (1).

5. The filter system according to claim 4, wherein the stabilization ring (6) comprises a tape, a cord and/or a hot-melt adhesive.

6. The filter system according to one of the claims 1 to 5, wherein the filter element (3) is circular-cylindrical or oval in cross-section.

## Revendications

1. Système de filtre (1) ayant un boîtier de filtre (2) comprenant une entrée de fluide (29) permettant au fluide (L) d'entrer dans le boîtier de filtre (2), et un élément filtrant (3) logé de manière amovible dans le boîtier de filtre (2), ledit élément filtrant comprenant un milieu filtrant plié (5) et une bague de stabilisation (6) stabilisant le milieu filtrant (5), dans lequel la bague de stabilisation (6) est fixée au milieu filtrant (5) de sorte que la bague de stabilisation (6) est disposée au moins par sections à l'intérieur d'une section transversale d'écoulement (A) de l'entrée de fluide (29), dans lequel le fluide (L) s'écoule directement sur le milieu filtrant (5) lors du fonctionnement du système de filtration (1), dans lequel la bague de stabilisation (6) est disposée au centre de la section transversale d'écoulement (A), dans lequel le fluide (L) s'écoule perpendiculairement contre le milieu filtrant (5) lors du fonctionnement du système de filtration (1), dans lequel un axe de symétrie (30) de l'entrée de fluide (29) s'étend à travers la bague de stabilisation (6), et dans lequel l'axe de symétrie (30) de l'entrée de fluide (29) est disposé perpendiculairement à un axe de symétrie (4) de l'élément filtrant (3).

2. Système de filtre selon la revendication 1, dans lequel l'élément filtrant (3) comprend un premier disque d'extrémité (9) et un deuxième disque d'extrémité (10), dans lequel le milieu filtrant (5) est disposé entre le premier disque d'extrémité (9) et le deuxième disque d'extrémité (10), t dans lequel la bague de stabilisation (6) est disposée de manière centrée ou excentrée entre le premier disque d'extrémité (9) et le deuxième disque d'extrémité (10).

3. Système de filtre selon la revendication 1 ou 2, dans lequel exactement une bague de stabilisation (6) est prévue.

4. Système de filtre selon l'une quelconque des revendications 1 à 3, dans lequel la bague de stabilisation (6) est collée sur le milieu filtrant (1).

5. Système de filtre selon la revendication 4, dans lequel la bague de stabilisation (6) comprend une bande, un fil et/ou une colle thermofusible.

6. Système de filtre selon l'une quelconque des revendications 1 à 5, dans lequel l'élément filtrant (3) a une section transversale cylindrique circulaire ou ovale.
